# FASCICULE DE BREVET EUROPEEN

(11) **EP 3 777 433 B1**
(45) Date de publication et mention de la délivrance du brevet: **29.06.2022**
(21) Numéro de dépôt: 19720971.1
(22) Date de dépôt: 04.04.2019
(51) Int. Cl.: H04W 74/02, H04W 72/12

(54) **PROCÉDÉ D'ALLOCATION DE RESSOURCES, PROCÉDÉ DE RÉCEPTION D'ALLOCATION DE RESSOURCES, PRODUITS PROGRAMME D'ORDINATEUR, MODULES ET SIGNAL CORRESPONDANTS**
VERFAHREN ZUR ZUWEISUNG VON RESSOURCEN, VERFAHREN ZUM EMPFANGEN EINER RESSOURCENZUWEISUNG, ZUGEHÖRIGE COMPUTERPROGRAMMPRODUKTE, MODULE UND SIGNAL
METHOD FOR ALLOCATING RESOURCES, METHOD FOR RECEIVING A RESOURCE ALLOCATION, CORRESPONDING COMPUTER PROGRAM PRODUCTS, MODULES AND SIGNAL

(30) Priorité: 11.04.2018 FR 1853157
(43) Date de publication de la demande: 17.02.2021
(73) Titulaire: ORANGE, 92130 Issy-les-Moulineaux (FR)
(72) Inventeur: LIN, Hao, 92326 Châtillon Cedex (FR)
(74) Mandataire: Vidon Brevets & Stratégie
(86) Numéro de dépôt international: PCT/FR2019/050785
(87) Numéro de publication internationale: WO 2019/197755

(56) Documents cités:
- WO-A1-2018/064360
- US-A1- 2010 014 423
- NOKIA ET AL: "On UL multiplexing between eMBB and URLLC", 3GPP DRAFT; R1-1802549_UL_MULTIPLEXING_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20180226 - 20180302 17 février 2018 (2018-02-17), XP051398011, Extrait de l'Internet: URL:http://www.3gpp.org/ftp/tsg%5Fran/WG1% 5FRL1/TSGR1%5F92/Docs/ [extrait le 2018-02-17]
- VIVO: "Remaining issues on multiplexing data with different transmission durations", 3GPP DRAFT; R1-1719798_MULTIPLEXING DATA WITH DIFFERENT TRANSMISSION DURATIONS_FINAL, 3RD GENERATION PARTNERSHIP PROJECT (3GPP), MOBILE COMPETENCE CENTRE ; 650, ROUTE DES LUCIOLES ; F-06921 SOPHIA-ANT , vol. RAN WG1, no. Reno, USA; 20171127 - 20171201 18 novembre 2017 (2017-11-18), XP051369541, Extrait de l'Internet: URL:http://www.3gpp.org/ftp/tsg%5Fran/WG1% 5FRL1/TSGR1%5F91/Docs/ [extrait le 2017-11-18]
- MITSUBISHI ELECTRIC: "Discussions on UL multiplexing", 3GPP DRAFT; R1-1804947-URLLC_92B_MITBS_D, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chennai, China; 20180416 - 20180420 6 avril 2018 (2018-04-06), XP051413346, Extrait de l'Internet: URL:http://www.3gpp.org/ftp/tsg%5Fran/WG1% 5FRL1/TSGR1%5F92b/Docs/ [extrait le 2018-04-06]

## Description

### 1 DOMAINE TECHNIQUE

Le domaine de l'invention est celui de la mise en œuvre des réseaux de radiocommunication. L'invention se rapporte plus particulièrement à la réduction de la latence dans de tels réseaux de radiocommunication.

L'invention a de nombreuses applications, notamment, mais non exclusivement, dans le domaine des réseaux de radiocommunications cellulaires conformes aux normes 3GPP (pour « 3rd Generation Partnership Project » en anglais) de dernières générations et/ou futures, en particulier pour les terminaux pouvant mettre en œuvre plusieurs catégories, ou modes, de transmission.

### 2 ARRIERE-PLAN TECHNOLOGIQUE

Les réseaux cellulaires de nouvelle génération, notamment les réseaux 5G en cours de normalisation au sein du 3GPP, sont prévus dès leur conception pour supporter différentes catégories de services, chaque catégorie présentant des contraintes technologiques différentes.

Par exemple, les réseaux 5G sont développés autour de trois catégories de services correspondant à trois modes de transmission mis en œuvre pour échanger les données entre la station de base et les terminaux qui lui sont connectés. Plus particulièrement, les trois modes en question sont :
- mMTC (pour « massive Machine Type Communications » en anglais), plus particulièrement destiné à des transmissions bas débit et basse consommation du type « objet connecté » ;
- eMBB (« enhanced Mobile Broadband » en anglais), plus particulièrement destiné a des transmissions de données très haut débit ; et
- URLLC (« Ultra-Reliable and Low Latency Communications » en anglais), plus particulièrement destiné à des transmissions de données avec une très faible latence dans le réseau.

Parmi les caractéristiques spécifiques à chaque mode de transmission se trouve la méthode d'accès par les terminaux aux ressources radio disponibles sur la voie montante en direction de la station de base, et donc d'allocation de ces ressources.

Par exemple, les transmissions mMTC étant adaptées aux « objets connectés », l'accès aux ressources sur la voie montante se fait classiquement par contention. En d'autres termes, les terminaux décident par eux-mêmes d'accéder au média et de démarrer une transmission en utilisant une ressource radio particulière parmi celles dédiées à ce type de transmission. Ceci permet d'éviter les mécanismes de requête et d'allocation de ressources couteux en termes de signalisation, mais au prix de collisions potentielles dans le réseau.

*A contrario,* les transmissions du type eMBB et URLLC sont destinées à des débits plus élevés. Pour que le surcoût lié à la signalisation reste faible face au débit de données, l'accès aux ressources radio par les terminaux se fait classiquement par ordonnancement : les terminaux obéissent à une station de base qui alloue spécifiquement les ressources disponibles. En pratique, le terminal envoie une requête d'allocation (« Scheduling Request », ou SR, en anglais) au réseau, notamment à la station de base, à laquelle le réseau répond par une allocation d'une ressource particulière sur la voie montante (« Uplink grant », ou UL, en anglais). Le terminal transmet alors ses données vers la station de base via la ressource radio préalablement allouée selon ce mécanisme.

Cependant, les transmissions du type eMBB et URLLC n'ont pas la même priorité. Les transmissions URLLC étant généralement associées à des services qui nécessitent une très faible latence dans le réseau, par exemple pour des applications de médecine déportée ou de véhiculer autonome, les ressources radio sur la voie montante leur sont allouées de manière prioritaire. De la sorte, pour un terminal mettant en œuvre à la fois des transmissions du type eMBB et des transmissions du type URLLC, il peut arriver qu'une ou plusieurs transmissions du type eMBB soient décalées à un instant ultérieur du fait d'une situation de collision temporelle avec une transmission du type URLLC qui se voit allouer les ressources sur la voie montante de manière prioritaire.

Le risque est que, dans certains cas, le décalage soit répété plusieurs fois, et que l'allocation à un service mettant en œuvre une transmission de type eMBB, ou plus généralement moins exigeant en terme de réactivité, soit finalement fortement, voire trop, différé. Il existe ainsi un besoin pour maitriser la latence dans de tels réseaux, notamment pour les transmissions de plus faible priorité, par exemple les transmissions du type eMBB.

L'état de la technique est illustrés par exemple dans les publications:
NOKIA ET AL: "On UL multiplexing between eMBB and URLLC",,vol. RAN WG1, Athens, Greece;
R1-1802549, 17 février 2018;
VIVO: "Remaining issues on multiplexing data with different transmission durations",vol. RAN WG1, Reno, USA; R1-1719798 18 novembre 2017
MITSUBISHI ELECTRIC: "Discussions on UL multiplexing",,vol. RAN WG1, Chennai, China; R1-1804947 6 avril 2018;
WO 2018/064360 A1 (INTEL IP CORP [US]) 5 avril 2018;
US 2010/014423 A1 (FURUSKAR ANDERS [SE] ET AL) 21 janvier 2010.

### 3 RESUME

Ainsi, selon un premier aspect, l'invention concerne un procédé d'allocation de ressources sur une voie montante entre un terminal utilisateur et une station de base d'un réseau de radiocommunication multiplexant les données dans des blocs de ressource distribués en temps et en fréquence dans des intervalles de temps. Un tel procédé d'allocation met en œuvre au moins deux modes d'allocation de ressources :
- un premier mode d'allocation, dit mode d'allocation standard, associé à un premier mode de transmission par le terminal, dit mode de transmission standard, et mettant en œuvre au moins une portion de signalisation contenant des informations d'allocation de ressource dans chaque intervalle de temps ; et
- un deuxième mode d'allocation, dit mode d'allocation prioritaire, associé à un deuxième mode de transmission par le terminal, dit mode de transmission prioritaire.

Selon l'invention, le réseau favorise le mode d'allocation prioritaire et peut allouer au terminal, selon le mode d'allocation prioritaire, au moins un bloc de ressource préalablement alloué selon le mode d'allocation standard, introduisant une situation de collision d'allocation. Dans une telle situation de collision, le réseau met en œuvre un mode d'allocation temporaire pour allouer au moins un bloc de ressource de remplacement dans le mode de transmission standard, mettant en œuvre un nombre de portions de signalisation contenant des informations d'allocation de ressource supérieur à celui utilisé dans le mode d'allocation standard, dans chaque intervalle de temps.

Ainsi, l'invention propose une solution nouvelle et inventive pour permettre la réduction de la latence associée au mode de transmission standard dans le réseau de radiocommunication, consistant à adopter, temporairement, un mode d'allocation présentant une fréquence de signalisation supérieure pour ce mode de transmission standard.

Plus particulièrement, en basculant dans le mode d'allocation temporaire présentant une fréquence de signalisation supérieure au mode standard, le terminal a plus de chance de se voir allouer dans un délai court de nouvelles ressources sur la voie montante afin d'émettre les données en attente suite à la collision temporelle. Ceci réduit la latence associée au mode de transmission standard dans le réseau de radiocommunication.

Selon un mode de réalisation particulier, le procédé d'allocation comprend les étapes suivantes :
- allocation, au terminal, d'au moins un premier bloc de ressource sur la voie montante selon le mode d'allocation standard ;
- allocation, au terminal, d'au moins le premier bloc de ressource sur la voie montante selon le mode d'allocation prioritaire ;
- détection d'une situation de collision temporelle entre les allocations dudit au moins un premier bloc de ressource ; et
- changement temporaire du mode d'allocation de ressources associé au mode de transmission standard depuis le mode d'allocation standard vers le mode d'allocation temporaire pour allouer ledit au moins un bloc de ressource de remplacement, le changement temporaire étant déclenché par la détection.

Selon un mode de réalisation particulier, le procédé d'allocation comprend en outre une étape de retour au mode d'allocation standard pour le mode de transmission standard, suite à l'allocation dudit au moins un bloc de ressource de remplacement.

Ainsi, la surconsommation liée à l'utilisation du mode d'allocation temporaire est maitrisée (le mode d'allocation temporaire étant plus consommateur en énergie que le mode standard de par la fréquence plus élevée de la signalisation).

L'invention concerne également un procédé de réception, par un terminal utilisateur, d'allocation de ressources sur une voie montante entre le terminal et une station de base d'un réseau de radiocommunication multiplexant les données dans des blocs de ressource distribués en temps et en fréquence dans des intervalles de temps. Un tel procédé de réception reçoit des informations d'allocation de ressources selon au moins deux modes d'allocation de ressources :
- un premier mode d'allocation de ressources par le réseau, dit mode d'allocation standard, associé à un premier mode de transmission par le terminal, dit mode de transmission standard, le mode d'allocation standard mettant en œuvre au moins une portion de signalisation contenant des informations d'allocation de ressource dans chaque intervalle de temps ; et
- un deuxième mode d'allocation de ressources par le réseau, dit mode d'allocation prioritaire, associé à un deuxième mode de transmission par le terminal, dit mode de transmission prioritaire.

Selon l'invention, lorsqu'au moins un bloc de ressource préalablement alloué selon le mode d'allocation standard est ensuite alloué selon le mode d'allocation prioritaire, introduisant une situation de collision d'allocation, le terminal reçoit des informations d'allocation de ressources selon un mode d'allocation temporaire pour l'allocation d'au moins un bloc de ressource de remplacement dans le mode de transmission standard, mettant en œuvre un nombre de portions de signalisation de portions de signalisation supérieur à celui utilisé dans le mode d'allocation standard, dans chaque intervalle de temps.

Ainsi, le terminal met en œuvre le principe de l'invention en implémentant des étapes symétriques de celles mises en œuvre par le réseau sans nécessiter de signalisation additionnelle. Ceci minimise encore la consommation globale du système ainsi que la charge du réseau.

Selon un mode de réalisation particulier, le procédé de réception d'allocation comprend les étapes suivantes :
- réception d'une allocation d'au moins un premier bloc de ressource sur la voie montante alloué selon le mode d'allocation standard ;
- réception d'une allocation dudit au moins premier bloc de ressource sur la voie montante alloué selon le mode d'allocation prioritaire ;
- détection d'une situation de collision temporelle entre les allocations dudit au moins un premier bloc de ressource ; et
- changement temporaire du mode de réception d'allocation de ressources associé au mode de transmission standard depuis le mode de réception d'allocation standard vers le mode de réception d'allocation temporaire pour recevoir l'allocation dudit au moins un bloc de ressource de remplacement, le changement temporaire étant déclenché par la détection.

Selon un mode de réalisation particulier, le procédé de réception d'allocation comprend en outre une étape de retour au mode de réception d'allocation standard pour le mode de transmission standard suite à la réception de l'allocation dudit au moins un bloc de ressource de remplacement.

Ainsi, la surconsommation liée à l'utilisation du mode de réception prioritaire est maitrisée.

Selon un mode de réalisation particulier, pour au moins un bloc de ressource donné alloué sélectivement selon le mode d'allocation standard ou le mode d'allocation temporaire pour le mode de transmission standard, des informations d'allocation dudit au moins un bloc de ressource donné sont transmises vers le terminal dans au moins un bloc de ressource d'une portion de signalisation, dit bloc de ressource commun.

Ainsi, le terminal est apte à recevoir une allocation de ressource quand bien même le mode de réception d'allocation qu'il met en œuvre n'est pas le mode de réception adapté au mode d'allocation mis en œuvre par le réseau.

Dans ce cas, selon une approche efficace, ledit au moins un bloc de ressource commun comprend un champ d'identification de mode d'allocation indiquant au terminal lequel parmi les modes d'allocation standard et temporaire est mis en œuvre dans le mode de transmission standard.

Ainsi, le terminal est apte à déterminer si le mode de réception d'allocation qu'il met en œuvre est effectivement celui adapté au mode d'allocation mis en œuvre côté réseau, ou s'il faut qu'il change son mode de réception.

Selon un mode de réalisation particulier, suite à une situation de collision, le mode d'allocation temporaire est mis en œuvre pendant un laps de temps prédéterminé, pour l'allocation d'au moins un bloc de ressource de remplacement pour le mode de transmission standard. Après ledit laps de temps, le mode d'allocation standard est à nouveau mis en œuvre.

Dans ce cas, selon une approche efficace, le procédé d'allocation ou le procédé de réception d'allocation comprend en outre les étapes suivantes :
- déclenchement, à détection de la situation de collision temporelle, d'un compteur ; et
- retour au mode d'allocation standard pour le mode de transmission standard, si le mode d'allocation couramment associé au mode de transmission standard est le mode d'allocation temporaire, et que le compteur indique qu'un laps de temps prédéterminé s'est écoulé depuis le déclenchement.

Ainsi, si lorsque le laps de temps prédéterminé est écoulé le réseau n'a pu encore allouer de ressource au terminal selon le mode d'allocation temporaire (par exemple si le réseau est occupé car trop chargé), les modes d'allocation et de réception correspondant reviennent tout de même vers les modes standards afin de maitriser la consommation en énergie du système.

Selon un mode de réalisation particulier, le mode d'allocation standard utilise pour signaler des allocations au terminal uniquement des blocs de ressource accolés temporellement au début ou à la fin d'intervalles de temps sur une voie descendante entre la station de base et le terminal. Le mode d'allocation temporaire utilise pour signaler des allocations au terminal des blocs de ressource distribués selon un schéma temporel équiréparti au sein d'intervalles de temps sur la voie descendante (par exemple les intervalles de temps sont les trames radio selon le standard mis en œuvre par le réseau de radiocommunication).

Selon un mode de réalisation particulier, le réseau de radiocommunication est du type cellulaire de cinquième génération, le mode de transmission standard est du type eMMB (pour « enhanced Mobile Broadband » en anglais), et le mode de transmission prioritaire est du type URLLC (pour « Ultra-Reliable and Low Latency Communications » en anglais).

L'invention concerne également un produit programme d'ordinateur comprenant des instructions de code de programme pour l'exécution des étapes du procédé d'allocation ou du procédé de réception d'allocation tels que décrits ci-dessus.

L'invention concerne également un module d'allocation de ressources. Un tel module d'allocation est notamment apte à mettre en œuvre le procédé d'allocation de ressources selon l'invention (selon l'un quelconque des différents modes de réalisation précités). Ainsi, les caractéristiques et avantages de ce module sont les mêmes que ceux du procédé d'allocation décrit précédemment. Par conséquent, ils ne sont pas détaillés plus amplement.

L'invention concerne également un module de réception d'allocation de ressources. Un tel module de réception d'allocation est notamment apte à mettre en œuvre le procédé de réception d'allocation de ressources selon l'invention (selon l'un quelconque des différents modes de réalisation précités). Ainsi, les caractéristiques et avantages de ce module sont les mêmes que ceux du procédé de réception d'allocation décrit précédemment. Par conséquent, ils ne sont pas détaillés plus amplement.

On note ici que, selon les mises en œuvre et les développements, de tels modules peuvent comprendre des moyens matériels (« hardware » en anglais) et/ou logiciels (« software » en anglais). Un module peut également être constitué de plusieurs éléments, ou modules, distincts, matériels et/ou logiciels interagissant entre eux.

L'invention concerne également un signal émis par une station de base d'un réseau de radiocommunication vers au moins un terminal, multiplexant des données dans des blocs de ressource distribués en temps et en fréquence dans des intervalles de temps. Un tel signal comprend au moins une portion de signalisation pour l'allocation de ressources comprenant un champ d'identification du mode d'allocation mis en œuvre dans la portion de signalisation, parmi des modes d'allocation standard et temporaire.

### 4 LISTE DES FIGURES

D'autres caractéristiques et avantages de l'invention apparaîtront à la lecture de la description suivante, donnée à titre d'exemple indicatif et non limitatif, et des dessins annexés, dans lesquels :
- les figures 1, 2a et 2b illustrent la problématique de collision temporelle entre des ressources allouées, selon l'art antérieur, sur la voie montante entre un terminal et une station de base selon deux modes d'allocation associés respectivement à deux modes de transmission du terminal de priorités différentes ;
- la figure 3 illustre des étapes d'un procédé d'allocation de ressources sur la voie montante entre le terminal et la station de base de la figure 1 selon un mode de réalisation de l'invention ;
- la figure 4 illustre des étapes d'un procédé de réception, par le terminal de la figure 1, d'allocation de ressources sur la voie montante en question selon un mode de réalisation de l'invention ;
- les figures 5a et 5b illustrent le changement temporaire, obtenu par application des procédés des figures 3 et 4, du mode d'allocation associé au mode de transmission de plus basse priorité du terminal de la figure 1 ;
- la figure 6 illustre une variante de signalisation utilisée dans les modes d'allocation associés au mode de transmission de plus basse priorité du terminal ;
- la figure 7 présente un exemple simplifié de structure d'un module destiné à mettre en œuvre le procédé d'allocation de la figure 3 ; et
- la figure 8 présente un exemple simplifié de structure d'un module destiné à mettre en œuvre le procédé de réception d'allocation de la figure 4.

### 5 DESCRIPTION DETAILLEE DE L'INVENTION

Sur toutes les figures du présent document, les éléments et étapes identiques sont désignés par une même référence.

### 5.1 problématique à laquelle répond l'invention

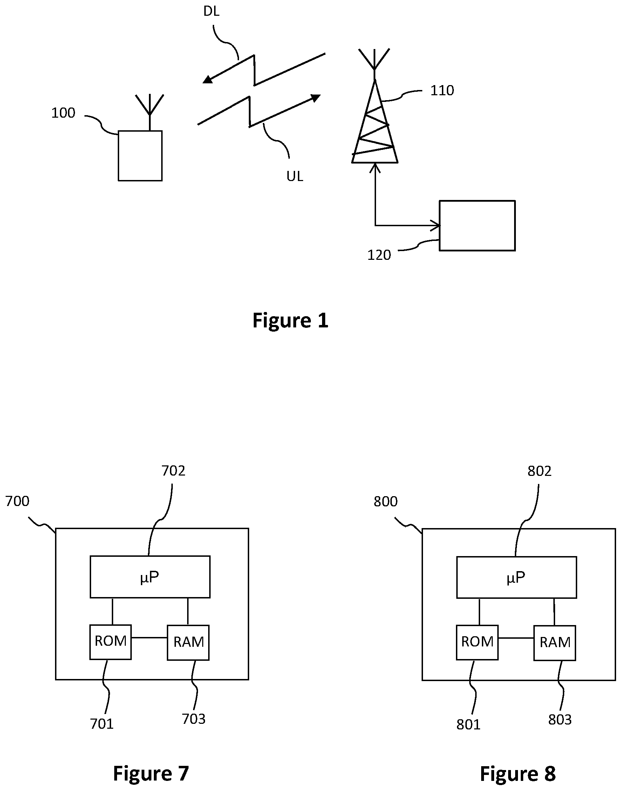

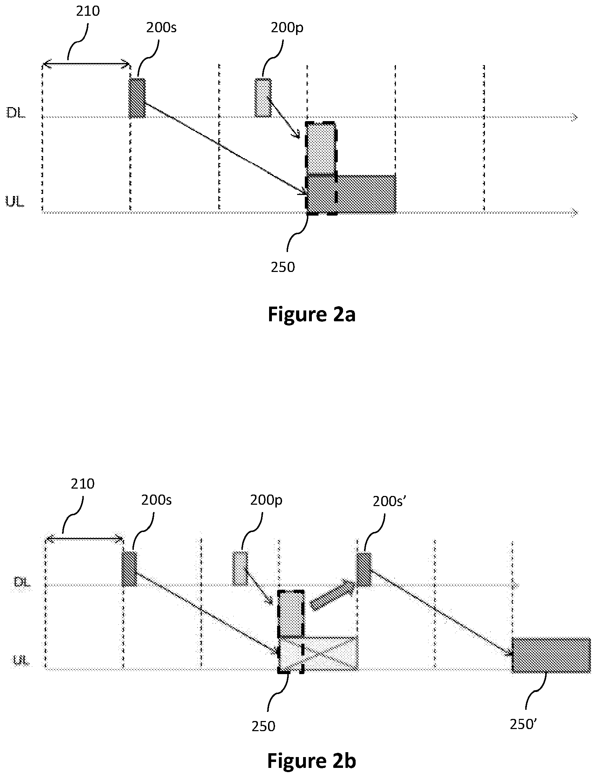

On décrit maintenant, en relation avec les **figures 1****,** **2a et 2b** la problématique à laquelle l'inventeur a été confronté dans le contexte d'un terminal 100 supportant deux modes de transmission sur la voie montante, ou UL (pour « Up Link » en anglais), vers la station de base 110 d'un réseau 5G lorsque les deux modes en question présentent des niveaux de priorité différents. L'invention ne se limite bien sûr pas à ce type particulier de réseau de radiocommunication de cinquième génération, mais présente un intérêt pour tout type de réseau desservant des terminaux supportant au moins deux types de transmission avec des niveaux de priorité différents.

Ainsi, le terminal 100 supporte :
- un premier mode de transmission présentant un niveau de priorité donné, dit mode de transmission standard, par exemple une transmission du type eMBB. Dans le cas eMBB, il s'agit d'une allocation mettant en œuvre une unique zone d'allocation par intervalle de temps (allocation « slot based » ou « SB ») ; et
- un deuxième mode de transmission présentant un niveau de priorité supérieur au niveau standard, dit mode de transmission prioritaire. Il s'agit par exemple d'une transmission du type URLLC nécessitant une latence réduite dans le réseau par rapport à la transmission standard du type eMBB. Dans ce cas URLLC, il s'agit d'une allocation mettant en œuvre plusieurs zones d'allocation par intervalle de temps (allocation « non slot based » ou « NSB »).

Comme discuté ci-dessus, pour de tels modes de transmission, l'accès aux ressources radio sur la voie montante se fait par ordonnancement. Le réseau considéré multiplexe les données dans des blocs de ressource distribués en temps et en fréquence dans des intervalles de temps 210 (par exemple les trames radio du standard considéré). De la sorte, pour allouer au terminal 100 des blocs de ressource sur la voie montante, la station de base 110 (ou alternativement un planificateur 120 déporté par exemple), met en œuvre :
- le mode d'allocation standard associé au mode de transmission standard ; et
- le mode d'allocation prioritaire associé au mode de transmission prioritaire.

Dans des variantes, les modes d'allocation en question sont mis en œuvre par un planificateur 120 déporté dans le réseau. Dans d'autres variantes non illustrées, les modes d'allocation sont mis en œuvre dans d'autres dispositifs déportés dans un serveur du réseau.

De retour aux figures 1, 2a et 2b, le mode d'allocation standard utilise par exemple pour signaler des allocations au terminal 100 uniquement des blocs de ressource 200s de portions de signalisation (par exemple un « monitoring occasion » au sens du 3GPP) accolées temporellement au début ou à la fin d'intervalles de temps 210 sur une voie descendante, ou DL (pour « Down Link » en anglais), entre la station de base 110 et le terminal 100 (par exemple les trois premiers blocs de ressources de chaque trame radio). Un tel signalement mettant en œuvre un nombre réduit de portions de signalisation par intervalle de temps 210 permet par exemple de réduire la consommation du terminal 100 en lui permettant de n'écouter les canaux de signalisation du réseau qu'un nombre réduit de fois par intervalle de temps 210.

*A contrario,* le mode de transmission prioritaire nécessitant une latence réduite dans le réseau par rapport à la transmission standard, le mode d'allocation prioritaire utilise pour sa signalisation des blocs de ressources 200p de portions de signalisation réparties tout au long des intervalles de temps 210 afin de réduire les délais liés aux échanges d'informations entre le terminal 100 et la station de base 110 quand bien même cela induit une surconsommation au niveau du terminal 100.

Dans un tel contexte, comme le réseau favorise le mode d'allocation prioritaire, il peut arriver qu'il alloue au terminal 100, selon le mode d'allocation prioritaire, au moins un bloc de ressource 250 sur la voie montante qui avait été préalablement alloué selon le mode d'allocation standard, introduisant une situation de collision d'allocation comme illustré sur la figure 2a.

Dans une telle situation, le terminal 100 ne peut utiliser le même bloc de ressource 250 sur la voie montante pour la transmission simultanée selon les deux modes de transmission et privilégie donc également le mode de transmission prioritaire. Le terminal 100 transmet ainsi à la station de base 110 les données associées au mode de transmission prioritaire en utilisant le bloc de ressource 250.

Le terminal attend ensuite de recevoir une nouvelle allocation via un nouveau bloc de ressources 200s' d'une autre portion de signalisation afin de se voir allouer un nouveau bloc de ressource 250' sur la voie montante selon le mode d'allocation standard comme illustré sur la figure 2b.

Un tel mécanisme induit ainsi une latence accrue pour le mode de transmission standard, en particulier s'il se réitère.

### 5.2 optimisation de l'allocation selon l'invention

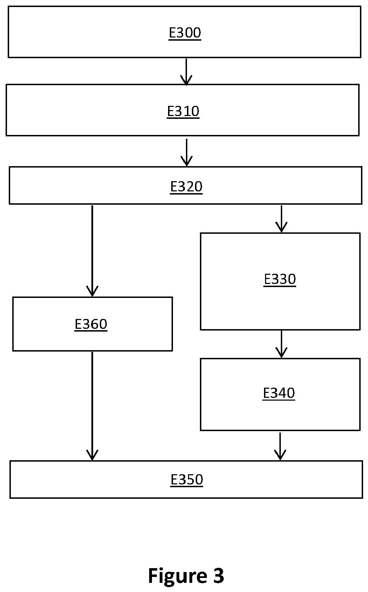

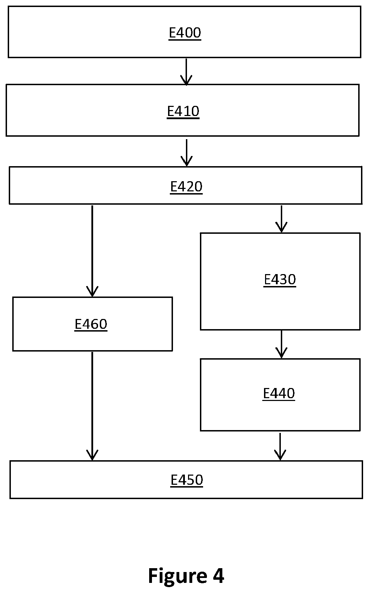

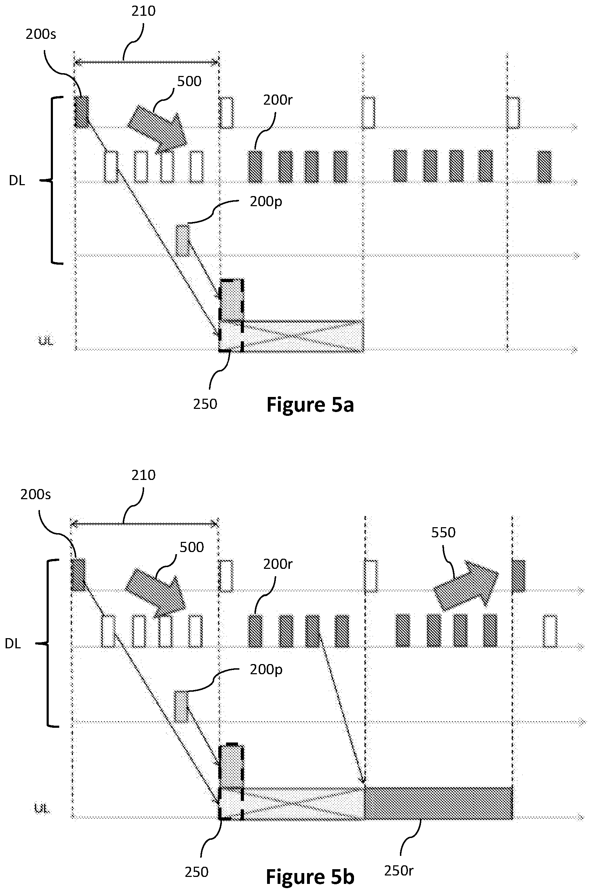

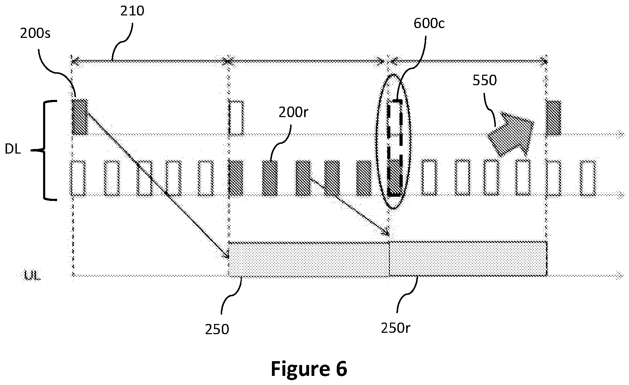

On décrit maintenant en relation avec les **figures 3** **et** **4** les étapes d'un procédé d'allocation de ressources sur la voie montante entre le terminal 100 et la station de base 110, ainsi que les étapes d'un procédé de réception, par le terminal 100, d'allocation de ressources sur la voie montante en question selon différents modes de réalisation de l'invention. Par ailleurs, les étapes en question ainsi que leur mise en œuvre dans différents modes de réalisation considérés sont illustrés par des exemples décrits en relation avec les **figures 5a, 5b** **et** **6****.**

Plus particulièrement, selon l'approche proposée, dans une situation de collision telle que décrite ci-dessus en relation avec les figures 2a et 2b, le réseau met en œuvre un mode d'allocation temporaire pour allouer au moins un bloc de ressource de remplacement 250r dans le mode de transmission standard pour permettre au terminal de transmettre les données associées au mode de transmission standard qu'il n'a pu transmettre dans le bloc de ressource 250. Réciproquement, le terminal 100 reçoit les informations d'allocation de ressources selon le mode d'allocation temporaire pour l'allocation d'au moins le bloc de ressource de remplacement 250r dans le mode de transmission standard.

Par ailleurs, le mode d'allocation temporaire utilise pour signaler des allocations au terminal 100 des blocs de ressource 200r de portions de signalisation qui sont présentes en nombre supérieur à celui utilisé dans le mode d'allocation standard, dans chaque intervalle de temps. Par exemple, dans une variante, le mode d'allocation temporaire utilise des blocs de ressource 200r de portions de signalisation distribuées selon un schéma temporel équiréparti au sein d'intervalles de temps 210 sur la voie descendante alors que le mode d'allocation standard utilise uniquement des blocs de ressource 200s de portions de signalisation accolées temporellement au début ou à la fin d'intervalles de temps 210. Dans une autre variante, le mode d'allocation temporaire utilise des blocs de ressource 200r de portions de signalisation distribuées selon un schéma temporel identique à celui mis en œuvre par le mode d'allocation prioritaire. De la sorte, le nombre de schémas temporels à gérer par le terminal 100 est minimisé.

Quelle que soit la variante de signalisation considérée pour le mode d'allocation temporaire, le terminal 100 a ainsi plus de chance de se voir allouer dans un délai court le bloc de ressource de remplacement 250r afin d'émettre les données associées au mode de transmission standard qui se trouvent en attente suite à la situation de collision temporelle. Ceci réduit la latence associée au mode de transmission standard dans le réseau de radiocommunication.

Ainsi, selon l'invention, on associe à au moins un des modes de transmission, notamment le mode de transmission standard, deux modes d'allocation distincts, sélectivement mis en œuvre. En particulier, on peut passer d'un mode d'allocation standard de type SB à un mode d'allocation temporaire de type NSB.

### 5.3 procédé d'allocation

Pour obtenir ce résultat, le réseau peut mettre en œuvre les étapes suivantes (figure 3) :
- allocation E300, au terminal 100, d'au moins un bloc de ressource 250 sur la voie montante selon le mode d'allocation standard ;
- allocation E310, au terminal 100, d'au moins le même bloc de ressource 250 sur la voie montante selon le mode d'allocation prioritaire ;
- détection E320 d'une situation de collision temporelle entre les allocations du bloc de ressource 250 ; et
- changement temporaire E430 (illustré par la flèche 500 sur les figures 5a et 5b) du mode d'allocation de ressources associé au mode de transmission standard depuis le mode d'allocation standard vers le mode d'allocation temporaire pour allouer E340 le bloc de ressource de remplacement 250r. Le changement temporaire est par ailleurs déclenché par la détection de la situation de collision.

### 5.4 procédé de réception d'allocation mis en œuvre dans le terminal

De manière symétrique, le terminal met en œuvre les étapes suivantes (figure 4) :
- réception E400 d'une allocation d'au moins un bloc de ressource 250 sur la voie montante alloué selon le mode d'allocation standard ;
- réception E410 d'une allocation d'au moins le même bloc de ressource 250 sur la voie montante alloué selon le mode d'allocation prioritaire ;
- détection E420 d'une situation de collision temporelle entre les allocations de l'au moins un bloc de ressource 250 ; et
- changement temporaire E430 du mode de réception d'allocation de ressources associé au mode de transmission standard depuis le mode de réception d'allocation standard vers le mode de réception d'allocation temporaire pour recevoir E440 l'allocation du bloc de ressource de remplacement 250r. Le changement temporaire est par ailleurs déclenché par la détection de la situation de collision.

Dans des variantes, le changement temporaire E430 est déclenché dans le terminal 100 par la transmission effective des données associées au mode de transmission prioritaire via le bloc de ressource 250.

De retour à la figure 4, on note que le terminal met en œuvre l'invention en implémentant les étapes symétriques de celles mises en œuvre par le réseau sans nécessiter de signalisation additionnelle entre la station de base 110 et le terminal 100. Ceci minimise encore la consommation globale du système, et notamment celle du terminal 100, ainsi que la charge du réseau.

Pour ce faire, les modes de réception d'allocation standard et temporaire sont par exemple programmés par le réseau sur le terminal 100 lorsque ce dernier se connecte à la station de base 110 (par exemple *via* la couche protocolaire RRC pour « Radio Resource Control »).

*A contrario,* dans d'autres modes de réalisation non illustrés, le terminal 100 est esclave du réseau et reçoit des informations de changement temporaire de mode de réception d'allocation de la station de base 110. Ainsi, le terminal 100 n'a pas à mettre en œuvre par lui-même le changement du mode de réception d'allocation associé à la transmission standard. Par ailleurs, le réseau reste maître du mode de réception d'allocation mis en œuvre par le terminal 100, évitant par là-même tout désalignement entre le mode d'allocation mis en œuvre par le réseau et le mode de réception d'allocation mis en œuvre par le terminal 100.

### 5.5 interruption du mode d'allocation temporaire

Dans le mode de réalisation illustré sur la figure 3, la fin de la mise en œuvre du mode d'allocation temporaire est déclenchée par l'allocation au terminal 100 du bloc de ressource de remplacement 250r.

De la sorte, le réseau met en œuvre dans ce mode de réalisation une étape E350 de retour au mode d'allocation standard (matérialisé par la flèche 550 sur la figure 5b) pour le mode de transmission standard, suite à l'allocation du bloc de ressource de remplacement 250r.

Ainsi, la surconsommation liée à l'utilisation du mode d'allocation temporaire prioritaire est maitrisée (le mode d'allocation temporaire prioritaire étant plus consommateur en énergie que le mode standard du fait de la fréquence plus élevée de la signalisation).

De manière symétrique, le terminal met en œuvre (figure 4) une étape E450 de retour au mode de réception d'allocation standard pour le mode de transmission standard suite à la réception de l'allocation du bloc de ressource de remplacement 250r.

Dans des variantes, d'autres critères peuvent également être pris en compte pour déclencher le retour à la mise en œuvre du mode d'allocation standard pour le mode de transmission standard. Par exemple, un critère de fin de la situation de collision telle que décrite ci-dessus peut également être pris en compte (seul ou en combinaison avec le critère précité d'allocation du bloc de ressource de remplacement 250r). En effet, une telle situation de collision peut perdurer dans le temps en cas de besoins importants en ressources radio pour le mode de transmission prioritaire.

Dans le mode de réalisation illustré sur les figures 3 et 4, le mode d'allocation temporaire est mis en œuvre pendant un laps de temps prédéterminé, pour l'allocation du bloc de ressource de remplacement 250r. De la sorte, après que le laps de temps est écoulé, le mode d'allocation standard est à nouveau mis en œuvre systématiquement.

Pour ce faire, le réseau (figure 3), respectivement le terminal (figure 4), mettent en œuvre une étape de déclenchement E360, respectivement E460, à détection de la situation de collision temporelle, d'un compteur. Dans ce cas, l'étape de retour E350, respectivement E450, au mode d'allocation standard pour le mode de transmission standard est mise en œuvre si le mode d'allocation couramment associé au mode de transmission standard est le mode d'allocation temporaire, et que le compteur indique qu'un laps de temps prédéterminé s'est écoulé depuis le déclenchement en question.

Ainsi, lorsque le laps de temps prédéterminé est écoulé, si le réseau n'a pu encore allouer de ressource au terminal selon le mode d'allocation temporaire (par exemple si le réseau est occupé car trop chargé), les modes d'allocation et de réception correspondant reviennent tout de même vers les modes standards afin de maitriser la consommation en énergie du système.

Cependant, dans d'autres modes de réalisation non illustrés, un tel mécanisme de retour au mode d'allocation standard après un laps de temps prédéterminé n'est pas mis en œuvre afin de maximiser les chances de se voir allouer un bloc de ressource de remplacement via le mode d'allocation temporaire quand bien même le réseau est chargé.

### 5.6 utilisation de blocs de ressource communs aux deux modes d'allocation

Dans une variante de signalisation illustrée sur la figure 6, les modes d'allocation standard et temporaire utilisent, pour la signalisation des allocations au terminal, certains blocs de ressource 600c en commun.

En effet, comme illustré sur la figure 5b, la station de base 110 revient à la mise en œuvre du mode d'allocation standard lorsqu'elle a alloué le bloc de remplacement 250r selon le mode d'allocation temporaire (étape E350 précitée). De manière symétrique, le terminal met en œuvre à nouveau le mode de réception d'allocation standard pour le mode de transmission standard suite à la réception de l'allocation du bloc de ressource de remplacement 250r (étape E450 précitée). Or, il peut arriver que le terminal 100 ne reçoive pas l'allocation selon le mode d'allocation temporaire (par exemple si les conditions de propagation sont tellement mauvaises que le terminal n'a pu décoder le signal reçu).

Dans ce cas, le mode de réception d'allocation mis en œuvre par le terminal 100 reste le mode temporaire alors que le mode d'allocation mis en œuvre par le réseau redevient le mode standard, conduisant par là-même à un désalignement entre le terminal 100 et le réseau. Ainsi, l'utilisation de blocs de ressource 600c en commun permet au terminal de recevoir une allocation de ressource quand bien même le mode de réception d'allocation qu'il met en œuvre n'est pas le mode de réception adapté au mode d'allocation mis en œuvre par le réseau.

### 5.7 signalisation pour les blocs de ressource commun

Dans certaines variantes, les blocs de ressource commun 600c comprennent un champ d'identification de mode d'allocation indiquant au terminal 100 lequel parmi les modes d'allocation standard et temporaire est mis en œuvre par le réseau dans le mode de transmission standard. Il s'agit par exemple d'un bit d'information indiquant le mode d'allocation utilisé.

Ainsi, le terminal est apte à déterminer si le mode de réception d'allocation qu'il met en œuvre est effectivement celui adapté au mode d'allocation mis en œuvre côté réseau, ou s'il faut qu'il change son mode de réception.

### 5.8 exemples d'implantation des procédés

La **figure 7** présente un exemple de module 700 d'allocation de ressources. Plus particulièrement, un tel module 700 permet la mise en œuvre du procédé d'allocation de ressources de la figure 3. Le module 700 comprend une mémoire vive 703 (par exemple une mémoire RAM), une unité de traitement 702 équipée par exemple d'un processeur, et pilotée par un programme d'ordinateur stocké dans une mémoire morte 701 (par exemple une mémoire ROM ou un disque dur). A l'initialisation, les instructions de code du programme d'ordinateur sont par exemple chargées dans la mémoire vive 703 avant d'être exécutées par le processeur de l'unité de traitement 702.

Cette figure 7 illustre seulement une manière particulière, parmi plusieurs possibles, de réaliser les moyens compris dans le module 700, afin qu'il effectue certaines étapes du procédé d'allocation de ressources détaillé ci-dessus, en relation avec la figure 3 (dans l'un quelconque des différents modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel). Dans le cas où les moyens compris dans le module 700 sont réalisés avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Dans certains modes de réalisation, un tel module 700 est inclus dans le terminal 100. Dans d'autre modes de réalisation, le module 700 d'allocation de ressources selon l'invention est un logiciel embarqué par exemple dans le logiciel global du terminal 100.

La **figure 8** présente un exemple de module 800 de réception d'allocation de ressources. Plus particulièrement, un tel module 800 permet la mise en œuvre du procédé de réception d'allocation de ressources de la figure 4. Le module 800 comprend une mémoire vive 803 (par exemple une mémoire RAM), une unité de traitement 802 équipée par exemple d'un processeur, et pilotée par un programme d'ordinateur stocké dans une mémoire morte 801 (par exemple une mémoire ROM ou un disque dur). A l'initialisation, les instructions de code du programme d'ordinateur sont par exemple chargées dans la mémoire vive 803 avant d'être exécutées par le processeur de l'unité de traitement 802.

Cette figure 8 illustre seulement une manière particulière, parmi plusieurs possibles, de réaliser les moyens compris dans le module 800, afin qu'il effectue certaines étapes du procédé de réception d'allocation de ressources détaillé ci-dessus, en relation avec la figure 4 (dans l'un quelconque des différents modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel). Dans le cas où les moyens compris dans le module 800 sont réalisés avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Dans certains modes de réalisation, un tel module 800 est inclus par exemple dans la station de base 110 ou dans un planificateur 120 déporté dans le réseau. Dans d'autre modes de réalisation, le module 800 de réception d'allocation de ressources selon l'invention est un logiciel embarqué par exemple dans le logiciel global de la station de base 110 ou du planificateur 120.

## Revendications

1. Procédé d'allocation de ressources sur une voie montante (UL) entre un terminal (100) utilisateur et une station de base (110) d'un réseau de radiocommunication multiplexant les données dans des blocs de ressource (250, 250r) distribués en temps et en fréquence dans des intervalles de temps (210),
ledit procédé d'allocation mettant en œuvre au moins deux modes d'allocation de ressources :
- un premier mode d'allocation, dit mode d'allocation standard, associé à un premier mode de transmission par ledit terminal, dit mode de transmission standard, et mettant en œuvre au moins une portion de signalisation contenant des informations d'allocation de ressource dans chaque intervalle de temps ; et
- un deuxième mode d'allocation, dit mode d'allocation prioritaire, associé à un deuxième mode de transmission par ledit terminal, dit mode de transmission prioritaire,
où **ledit réseau** favorise ledit mode d'allocation prioritaire et peut allouer audit terminal, selon ledit mode d'allocation prioritaire, au moins un bloc de ressource (250) préalablement alloué selon ledit mode d'allocation standard, introduisant une situation de collision d'allocation, **et caractérisé en ce que,** dans une telle situation de collision, ledit réseau met en œuvre un mode d'allocation temporaire pour allouer au moins un bloc de ressource (250r) de remplacement dans le mode de transmission standard, mettant en œuvre un nombre de portions de signalisation contenant des informations d'allocation de ressource supérieur à celui utilisé dans le mode d'allocation standard, dans chaque intervalle de temps.

2. Procédé d'allocation selon la revendication 1 comprenant les étapes suivantes :
- **allocation** (E300), audit terminal, d'au moins un premier bloc de ressource sur la voie montante selon le mode d'allocation standard ;
- **allocation** (E310), audit terminal, d'au moins ledit premier bloc de ressource sur la voie montante selon le mode d'allocation prioritaire ;
- **détection** (E320) d'une situation de collision temporelle entre lesdites allocations dudit au moins un premier bloc de ressource ; et
- **changement** (E330) temporaire du mode d'allocation de ressources associé audit mode de transmission standard depuis ledit mode d'allocation standard vers le mode d'allocation temporaire pour **allouer** (E340) ledit au moins un bloc de ressource de remplacement, ledit changement temporaire étant déclenché par ladite détection.

3. Procédé d'allocation selon la revendication 2 comprenant en outre une étape de **retour** (E350) au mode d'allocation standard pour le mode de transmission standard, suite à l'allocation dudit au moins un bloc de ressource de remplacement.

4. Procédé de réception, par un terminal utilisateur (100), d'allocation de ressources sur une voie montante (UL) entre ledit terminal et une station de base (110) d'un réseau de radiocommunication multiplexant les données dans des blocs de ressource (250, 250r) distribués en temps et en fréquence dans des intervalles de temps (210),
ledit procédé de réception recevant des informations d'allocation de ressources selon au moins deux modes d'allocation de ressources :
- un premier mode d'allocation de ressources par le réseau, dit mode d'allocation standard, associé à un premier mode de transmission par ledit terminal, dit mode de transmission standard, ledit mode d'allocation standard mettant en œuvre au moins une portion de signalisation contenant des informations d'allocation de ressource dans chaque intervalle de temps ; et
- un deuxième mode d'allocation de ressources par le réseau, dit mode d'allocation prioritaire, associé à un deuxième mode de transmission par ledit terminal, dit mode de transmission prioritaire,
où, lorsqu'au moins un bloc de ressource (250) préalablement alloué selon ledit mode d'allocation standard est ensuite alloué selon ledit mode d'allocation prioritaire, introduisant une situation de collision d'allocation, le procédé est **caractérisé en ce que** ledit terminal reçoit des informations d'allocation de ressources selon un mode d'allocation temporaire pour l'allocation d'au moins un bloc de ressource (250r) de remplacement dans le mode de transmission standard, mettant en œuvre un nombre de portions de signalisation supérieur à celui utilisé dans le mode d'allocation standard, dans chaque intervalle de temps.

5. Procédé de réception d'allocation selon la revendication 4 comprenant les étapes suivantes :
- **réception** (E400) d'une allocation d'au moins un premier bloc de ressource sur la voie montante alloué selon ledit mode d'allocation standard ;
- **réception** (E410) d'une allocation dudit au moins premier bloc de ressource sur la voie montante alloué selon le mode d'allocation prioritaire ;
- **détection** (E420) d'une situation de collision temporelle entre lesdites allocations dudit au moins un premier bloc de ressource ; et
- **changement** (E430) temporaire du mode de réception d'allocation de ressources associé audit mode de transmission standard depuis ledit mode de réception d'allocation standard vers le mode de réception d'allocation temporaire pour **recevoir** (E440) ladite allocation dudit au moins un bloc de ressource de remplacement, ledit changement temporaire étant déclenché par ladite détection.

6. Procédé de réception d'allocation selon la revendication 5 comprenant en une étape de **retour** (E450) au mode de réception d'allocation standard pour le mode de transmission standard suite à la réception de ladite allocation dudit au moins un bloc de ressource de remplacement.

7. Procédé d'allocation selon l'une quelconque des revendications 1 à 3 ou de réception d'allocation selon l'une quelconque des revendications 4 à 6, **caractérisé en ce que**, pour au moins un bloc de ressource donné alloué sélectivement selon le mode d'allocation standard ou le mode d'allocation temporaire pour ledit mode de transmission standard, des informations d'allocation dudit au moins un bloc de ressource donné sont transmises vers le terminal dans au moins un bloc de ressource d'une portion de signalisation, dit bloc de ressource commun.

8. Procédé selon la revendication 7, **caractérisé en ce que** ledit au moins un bloc de ressource commun comprend un champ d'identification de mode d'allocation indiquant audit terminal lequel parmi les modes d'allocation standard et temporaire est mis en œuvre dans le mode de transmission standard.

9. Procédé selon l'une quelconque des revendications 1 à 8, **caractérisé en ce que**, suite à une situation de collision, ledit mode d'allocation temporaire est mis en œuvre pendant un laps de temps prédéterminé, pour l'allocation d'au moins un bloc de ressource de remplacement pour le mode de transmission standard, et **en ce qu'**après ledit laps de temps, ledit mode d'allocation standard est à nouveau mis en œuvre.

10. Procédé selon l'une quelconque des revendications 1 à 9,
dans lequel ledit mode d'allocation standard utilise pour signaler des allocations audit terminal uniquement des blocs de ressource accolés temporellement au début ou à la fin d'intervalles de temps sur une voie descendante entre ladite station de base et ledit terminal,
et dans lequel ledit mode d'allocation temporaire utilise pour signaler des allocations audit terminal des blocs de ressource distribués selon un schéma temporel équiréparti au sein d'intervalles de temps sur la voie descendante.

11. Procédé selon l'une quelconque des revendications 1 à 10,
dans lequel ledit réseau de radiocommunication est du type cellulaire de cinquième génération,
dans lequel ledit mode de transmission standard est du type eMMB (pour « enhanced Mobile Broadband » en anglais),
et dans lequel ledit mode de transmission prioritaire est du type URLLC (pour « Ultra-Reliable and Low Latency Communications » en anglais).

12. Produit programme d'ordinateur comprenant des instructions de code de programme pour la mise en œuvre d'un procédé selon l'une quelconque des revendications 1 à 11, lorsque ledit programme est exécuté sur un ordinateur.

13. Module d'allocation (700) de ressources sur une voie montante (UL) entre un terminal (100) utilisateur et une station de base (120) d'un réseau de radiocommunication multiplexant les données dans des blocs de ressource (250, 250r) distribués en temps et en fréquence dans des intervalles de temps,
ledit module d'allocation comprenant des moyens d'allocation (702) mettant en œuvre au moins deux modes d'allocation de ressources :
- un premier mode d'allocation, dit mode d'allocation standard, associé à un premier mode de transmission par ledit terminal, dit mode de transmission standard, et mettant en œuvre au moins une portion de signalisation contenant des informations d'allocation de ressource dans chaque intervalle de temps ; et
- un deuxième mode d'allocation, dit mode d'allocation prioritaire, associé à un deuxième mode de transmission par ledit terminal, dit mode de transmission prioritaire,
où lesdits moyens favorisent ledit mode d'allocation prioritaire et peuvent allouer audit terminal, selon ledit mode d'allocation prioritaire, au moins un bloc de ressource (250) préalablement alloué selon ledit mode d'allocation standard, introduisant une situation de collision d'allocation, **et caractérisé en ce que,** dans une telle situation de collision, lesdits moyens mettent en œuvre un mode d'allocation temporaire pour allouer au moins un bloc de ressource (250r) de remplacement dans le mode de transmission standard, mettant en œuvre un nombre de portions de signalisation contenant des informations d'allocation de ressource supérieur à celui utilisé dans le mode d'allocation standard, dans chaque intervalle de temps.

14. Module de réception (800), par un terminal utilisateur (100), d'allocation de ressources sur une voie montante (UL) entre ledit terminal et une station de base (120) d'un réseau de radiocommunication multiplexant les données dans des blocs de ressource distribués en temps et en fréquence dans des intervalles de temps,
ledit module de réception comprenant des moyens de réception (802) d'informations d'allocation de ressources selon au moins deux modes d'allocation de ressources :
- un premier mode d'allocation de ressources par le réseau, dit mode d'allocation standard, associé à un premier mode de transmission par ledit terminal, dit mode de transmission standard, ledit mode d'allocation standard mettant en œuvre au moins une portion de signalisation contenant des informations d'allocation de ressource dans chaque intervalle de temps ; et
- un deuxième mode d'allocation de ressources par le réseau, dit mode d'allocation prioritaire, associé à un deuxième mode de transmission par ledit terminal, dit mode de transmission prioritaire,
où, lorsqu'au moins un bloc de ressource (250) préalablement alloué selon ledit mode d'allocation standard est ensuite alloué selon ledit mode d'allocation prioritaire, introduisant une situation de collision d'allocation, et **caractérisé en ce que** lesdits moyens reçoivent des informations d'allocation de ressources selon un mode d'allocation temporaire pour l'allocation d'au moins un bloc de ressource (250r) de remplacement dans le mode de transmission standard, mettant en œuvre un nombre de portions de signalisation supérieur à celui utilisé dans le mode d'allocation standard, dans chaque intervalle de temps.

## Patentansprüche

1. Verfahren zur Zuweisung von Ressourcen auf einem Upstream-Kanal (UL) zwischen einem Benutzerendgerät (100) und einer Basisstation (110) eines Funkverbindungsnetzes, das die Daten in Ressourcenblöcke (250, 250r) multiplext, die in Zeitschlitzen (210) zeit- und frequenzabhängig ausgegeben werden,
wobei das Zuweisungsverfahren mindestens zwei Ressourcen-Zuweisungsmodi anwendet:
- einen Standard-Zuweisungsmodus genannten ersten Zuweisungsmodus, der einem Standard-Übertragungsmodus genannten ersten Übertragungsmodus durch das Endgerät zugeordnet ist und in jedem Zeitschlitz mindestens einen Ressourcen-Zuweisungsinformationen enthaltenden Signalisierungsteil anwendet; und
- einen prioritärer Zuweisungsmodus genannten zweiten Zuweisungsmodus, der einem prioritärer Übertragungsmodus genannten zweiten Übertragungsmodus durch das Endgerät zugeordnet ist, wobei das Netz den prioritären Zuweisungsmodus bevorzugt und dem Endgerät gemäß dem prioritären Zuweisungsmodus mindestens einen Ressourcenblock (250) zuweisen kann, der vorher gemäß dem Standard-Zuweisungsmodus zugewiesen wurde, wodurch eine Situation der Zuweisungskollision eingeführt wird,
und **dadurch gekennzeichnet, dass** in einer solchen Kollisionssituation das Netz einen temporären Zuweisungsmodus anwendet, um mindestens einen Ersatz-Ressourcenblock (250r) im Standard-Übertragungsmodus zuzuweisen, der in jedem Zeitschlitz eine Anzahl von Ressourcen-Zuweisungsinformationen enthaltenden Signalisierungsteilen anwendet, die höher ist als diejenige, die im Standard-Zuweisungsmodus verwendet wird.

2. Zuweisungsverfahren nach Anspruch 1, das die folgenden Schritte enthält:
- Zuweisung (E300), zum Endgerät, mindestens eines ersten Ressourcenblocks auf dem Upstream-Kanal gemäß dem Standard-Zuweisungsmodus;
- Zuweisung (E310), zum Endgerät, mindestens des ersten Ressourcenblocks auf dem Upstream-Kanal gemäß dem prioritären Zuweisungsmodus;
- Erfassung (E320) einer zeitlichen Kollisionssituation zwischen den Zuweisungen des mindestens einen ersten Ressourcenblocks; und
- temporäre Änderung (E330) des dem Standard-Übertragungsmodus zugeordneten Ressourcen-Zuweisungsmodus vom Standard-Zuweisungsmodus zum temporären Zuweisungsmodus, um den mindestens einen Ersatz-Ressourcenblock zuzuweisen (E340), wobei die temporäre Änderung durch die Erfassung ausgelöst wird.

3. Zuweisungsverfahren nach Anspruch 2, das außerdem einen Schritt der Rückkehr (E350) zum Standard-Zuweisungsmodus für den Standard-Übertragungsmodus nach der Zuweisung des mindestens einen Ersatz-Ressourcenblocks enthält.

4. Verfahren zum Empfang, durch ein Benutzerendgerät (100), einer Ressourcenzuweisung auf einem Upstream-Kanal (UL) zwischen dem Endgerät und einer Basisstation (110) eines Funkverbindungsnetzes, das die Daten in Ressourcenblöcke (250, 250r) multiplext, die in Zeitschlitzen (210) zeit- und frequenzabhängig ausgegeben werden,
wobei das Empfangsverfahren Ressourcen-Zuweisungsinformationen gemäß mindestens zwei Ressourcen-Zuweisungsmodi empfängt:
- einem ersten Standard-Zuweisungsmodus genannten Zuweisungsmodus von Ressourcen durch das Netz, der einem ersten Standard-Übertragungsmodus genannten Übertragungsmodus durch das Endgerät zugeordnet ist, wobei der Standard-Zuweisungsmodus in jedem Zeitschlitz mindestens einen Ressourcen-Zuweisungsinformationen enthaltenden Signalisierungsteil anwendet; und
- einem zweiten prioritärer Zuweisungsmodus genannten Zuweisungsmodus von Ressourcen durch das Netz, der einem zweiten prioritärer Übertragungsmodus genannten Übertragungsmodus durch das Endgerät zugeordnet ist,
wobei, wenn mindestens ein Ressourcenblock (250), der vorher gemäß dem Standard-Zuweisungsmodus zugewiesen wurde, anschließend gemäß dem prioritären Zuweisungsmodus zugewiesen wird, wodurch eine Zuweisungskollisionssituation eingeführt wird, das Verfahren **dadurch gekennzeichnet ist, dass** das Endgerät Ressourcen-Zuweisungsinformationen gemäß einem temporären Zuweisungsmodus für die Zuweisung mindestens eines Ersatz-Ressourcenblocks (250r) im Standard-Übertragungsmodus empfängt, der in jedem Zeitschlitz eine Anzahl von Signalisierungsteilen anwendet, die höher ist als diejenige, die im Standard-Zuweisungsmodus verwendet wird.

5. Zuweisungsempfangsverfahren nach Anspruch 4, das die folgenden Schritte enthält:
- Empfang (E400) einer Zuweisung mindestens eines ersten Ressourcenblocks auf dem Upstream-Kanal, der gemäß dem Standard-Zuweisungsmodus zugewiesen wird;
- Empfang (E410) einer Zuweisung des mindestens ersten Ressourcenblocks auf dem Upstream-Kanal, der gemäß dem prioritären Zuweisungsmodus zugewiesen wird;
- Erfassung (E420) einer zeitlichen Kollisionssituation zwischen den Zuweisungen des mindestens einen ersten Ressourcenblocks; und
- temporäre Änderung (E430) des dem Standard-Übertragungsmodus zugeordneten Ressourcen-Zuweisungsempfangsmodus vom Standard-Zuweisungsempfangsmodus zum temporären Zuweisungsempfangsmodus, um die Zuweisung des mindestens einen Ersatz-Ressourcenblocks zu empfangen (E440), wobei die temporäre Änderung von der Erfassung ausgelöst wird.

6. Zuweisungsempfangsverfahren nach Anspruch 5, das einen Schritt der Rückkehr (E450) zum Standard-Zuweisungsempfangsmodus für den Standard-Übertragungsmodus nach dem Empfang der Zuweisung des mindestens einen Ersatz-Ressourcenblocks enthält.

7. Zuweisungsverfahren nach einem der Ansprüche 1 bis 3 oder Zuweisungsempfangsverfahren nach einem der Ansprüche 4 bis 6, **dadurch gekennzeichnet, dass** für mindestens einen gegebenen Ressourcenblock, der selektiv gemäß dem Standard-Zuweisungsmodus oder dem temporären Zuweisungsmodus für den Standard-Übertragungsmodus zugewiesen wird, Zuweisungsinformationen des mindestens einen gegebenen Ressourcenblocks zum Endgerät in mindestens einem gemeinsamer Ressourcenblock genannten Ressourcenblock eines Signalisierungsteils übertragen werden.

8. Verfahren nach Anspruch 7, **dadurch gekennzeichnet, dass** der mindestens eine gemeinsame Ressourcenblock ein Zuweisungsmodus-Identifikationsfeld enthält, das dem Endgerät anzeigt, welcher vom Standard- und temporären Zuweisungsmodus im Standard-Übertragungsmodus angewendet wird.

9. Verfahren nach einem der Ansprüche 1 bis 8, **dadurch gekennzeichnet, dass** nach einer Kollisionssituation der temporäre Zuweisungsmodus während eines vorbestimmten Zeitraums für die Zuweisung mindestens eines Ersatz-Ressourcenblocks für den Standard-Übertragungsmodus angewendet wird, und dass nach dem Zeitraum erneut der Standard-Zuweisungsmodus angewendet wird.

10. Verfahren nach einem der Ansprüche 1 bis 9, wobei der Standard-Zuweisungsmodus zur Signalisierung von Zuweisungen an das Endgerät nur Ressourcenblöcke verwendet, die zeitlich dem Anfang oder dem Ende von Zeitschlitzen auf einem Downstream-Kanal zwischen der Basisstation und dem Endgerät angefügt sind,
und wobei der temporäre Zuweisungsmodus zur Signalisierung von Zuweisungen an das Endgerät Ressourcenblöcke verwendet, die gemäß einem Zeitschema verteilt werden, das gleichmäßig innerhalb von Zeitschlitzen auf dem Downstream-Kanal verteilt ist.

11. Verfahren nach einem der Ansprüche 1 bis 10, bei dem das Funkverbindungsnetz vom zellularen 5G-Typ ist,
wobei der Standard-Übertragungsmodus vom Typ eMMB (für « enhanced Mobile Broadband » im Englischen) ist,
und wobei der prioritäre Übertragungsmodus vom Typ URLLC (für « Ultra-Reliable and Low Latency Communications » im Englischen) ist.

12. Computerprogrammprodukt, das Programmcodeanweisungen zur Durchführung eines Verfahrens nach einem der Ansprüche 1 bis 11 enthält, wenn das Programm auf einem Computer ausgeführt wird.

13. Modul zur Zuweisung (700) von Ressourcen auf einem Upstream-Kanal (UL) zwischen einem Benutzerendgerät (100) und einer Basisstation (120) eines Funkverbindungsnetzes, das die Daten in Ressourcenblöcke (250, 250r) multiplext, die in Zeitschlitzen (210) zeit- und frequenzabhängig ausgegeben werden,
wobei das Zuweisungsmodul Zuweisungseinrichtungen (702) enthält, die mindestens zwei Ressourcen-Zuweisungsmodi anwenden:
- einen Standard-Zuweisungsmodus genannten ersten Zuweisungsmodus, der einem Standard-Übertragungsmodus genannten ersten Übertragungsmodus durch das Endgerät zugeordnet ist und der in jedem Zeitschlitz mindestens einen Ressourcen-Zuweisungsinformationen enthaltenden Signalisierungsteil anwendet; und
- einen prioritärer Zuweisungsmodus genannten zweiten Zuweisungsmodus, der einem prioritärer Übertragungsmodus genannten zweiten Übertragungsmodus durch das Endgerät zugeordnet ist, wobei die Einrichtungen den prioritären Zuweisungsmodus bevorzugen und dem Endgerät gemäß dem prioritären Zuweisungsmodus mindestens einen Ressourcenblock (250) zuweisen können, der vorher gemäß dem Standard-Zuweisungsmodus zugewiesen wurde, wodurch eine Zuweisungskollisionssituation eingeführt wird,
und **dadurch gekennzeichnet, dass** in einer solchen Kollisionssituation die Einrichtungen einen temporären Zuweisungsmodus anwenden, um mindestens einen Ersatz-Ressourcenblock (250r) im Standard-Übertragungsmodus zuzuweisen, der in jedem Zeitschlitz eine Anzahl von Ressourcen-Zuweisungsinformationen enthaltenden Signalisierungsteilen anwendet, die höher ist als diejenige, die im Standard-Zuweisungsmodus verwendet wird.

14. Modul zum Empfang (800), durch ein Benutzerendgerät (100), einer Ressourcenzuweisung auf einem Upstream-Kanal (UL) zwischen dem Endgerät und einer Basisstation (120) eines Funkverbindungsnetzes, das die Daten in Ressourcenblöcke (250, 250r) multiplext, die in Zeitschlitzen (210) zeit- und frequenzabhängig ausgegeben werden,
wobei das Empfangsmodul Empfangseinrichtungen (802) von Ressourcen-Zuweisungsinformationen gemäß mindestens zwei Ressourcen-Zuweisungsmodi enthält:
- einen Standard-Zuweisungsmodus genannten ersten Zuweisungsmodus von Ressourcen durch das Netz, der einem Standard-Übertragungsmodus genannten ersten Übertragungsmodus durch das Endgerät zugeordnet ist, wobei der Standard-Zuweisungsmodus in jedem Zeitschlitz mindestens einen Ressourcen-Zuweisungsinformationen enthaltenden Signalisierungsteil anwendet; und
- einen prioritärer Zuweisungsmodus genannten zweiten Zuweisungsmodus von Ressourcen durch das Netz, der einem prioritärer Übertragungsmodus genannten zweiten Übertragungsmodus durch das Endgerät zugeordnet ist,
wobei, wenn mindestens ein Ressourcenblock (250), der vorher gemäß dem Standard-Zuweisungsmodus zugewiesen wurde, anschließend gemäß dem prioritären Zuweisungsmodus zugewiesen wird, wodurch eine Zuweisungskollisionssituation eingeführt wird,
und **dadurch gekennzeichnet, dass** die Einrichtungen Ressourcen-Zuweisungsinformationen gemäß einem temporären Zuweisungsmodus für die Zuweisung mindestens eines Ersatz-Ressourcenblocks (250r) im Standard-Übertragungsmodus empfangen, der in jedem Zeitschlitz eine Anzahl von Signalisierungsteilen anwendet, die höher ist als diejenige, die im Standard-Zuweisungsmodus verwendet wird.

## Claims

1. Method for allocating resources on an uplink (UL) between a user terminal (100) and a base station (110) of a radio communication network multiplexing data in resource blocks (250, 250r) that are time-distributed and frequency-distributed into time intervals (210),
said allocation method implementing at least two resource allocation modes:
- a first allocation mode, called standard allocation mode, associated with a first transmission mode of said terminal, called standard transmission mode, and implementing at least one signalling portion containing resource allocation information in each time interval; and
- a second allocation mode, called priority allocation mode, associated with a second transmission mode of said terminal, called priority transmission mode, in which
**said network** favours said priority allocation mode and is able to allocate, to said terminal, using said priority allocation mode, at least one resource block (250) previously allocated using said standard allocation mode, introducing an allocation collision situation,
**and characterized in that,** in such a collision situation, said network implements a temporary allocation mode in order to allocate at least one substitute resource block (250r) in the standard transmission mode, implementing a number of signalling portions containing resource allocation information greater than that used in the standard allocation mode, in each time interval.

2. Allocation method according to Claim 1, comprising the following steps:
- **allocating** (E300), to said terminal, at least one first resource block on the uplink using the standard allocation mode;
- **allocating** (E310), to said terminal, at least said first resource block on the uplink using the priority allocation mode;
- **detecting** (E320) a temporal collision situation between said allocations of said at least one first resource block; and
- temporarily **changing** (E330) the resource allocation mode associated with said standard transmission mode from said standard allocation mode to the temporary allocation mode in order to **allocate** (E340) said at least one substitute resource block, said temporary change being triggered by said detection.

3. Allocation method according to Claim 2, furthermore comprising a step of **returning** (E350) to the standard allocation mode for the standard transmission mode, following the allocation of said at least one substitute resource block.

4. Method for receiving, by way of a user terminal (100), an allocation of resources on an uplink (UL) between said terminal and a base station (110) of a radio communication network multiplexing data in resource blocks (250, 250r) that are time-distributed and frequency-distributed into time intervals (210),
said reception method receiving resource allocation information using at least two resource allocation modes:
- a first mode in which resources are allocated by the network, called standard allocation mode, associated with a first transmission mode of said terminal, called standard transmission mode, said standard allocation mode implementing at least one signalling portion containing resource allocation information in each time interval; and
- a second mode in which resources are allocated by the network, called priority allocation mode, associated with a second transmission mode of said terminal, called priority transmission mode,
in which
when at least one resource block (250) previously allocated using said standard allocation mode is then allocated using said priority allocation mode, introducing an allocation collision situation, the method is **characterized in that** said terminal receives resource allocation information using a temporary allocation mode in order to allocate at least one substitute resource block (250r) in the standard transmission mode, implementing a number of signalling portions greater than that used in the standard allocation mode, in each time interval.

5. Method for receiving an allocation according to Claim 4, comprising the following steps:
- **receiving** (E400) an allocation of at least one first resource block on the uplink allocated using said standard allocation mode;
- **receiving** (E410) an allocation of said at least one first resource block on the uplink allocated using the priority allocation mode;
- **detecting** (E420) a temporal collision situation between said allocations of said at least one first resource block; and
- temporarily **changing** (E430) the resource allocation reception mode associated with said standard transmission mode from said standard allocation reception mode to the temporary allocation reception mode in order to **receive** (E440) said allocation of said at least one substitute resource block, said temporary change being triggered by said detection.

6. Method for receiving an allocation according to Claim 5, comprising a step of **returning** (E450) to the standard allocation reception mode for the standard transmission mode following the reception of said allocation of said at least one substitute resource block.

7. Allocation method according to any one of Claims 1 to 3 or method for receiving an allocation according to any one of Claims 4 to 6, **characterized in that**, for at least one given resource block allocated selectively using the standard allocation mode or the temporary allocation mode for said standard transmission mode, allocation information for said at least one given resource block is transmitted to the terminal in at least one resource block of a signalling portion, called common resource block.

8. Method according to Claim 7, **characterized in that** said at least one common resource block comprises an allocation mode identification field telling said terminal which of the standard and temporary allocation modes is implemented in the standard transmission mode.

9. Method according to any one of Claims 1 to 8, **characterized in that**, following a collision situation, said temporary allocation mode is implemented for a predetermined time period, in order to allocate at least one substitute resource block for the standard transmission mode, and **in that**, after said time period, said standard allocation mode is implemented again.

10. Method according to any one of Claims 1 to 9, wherein said standard allocation mode uses, to signal allocations to said terminal, only resource blocks temporally added to the start or to the end of time intervals on a downlink between said base station and said terminal,
and wherein said temporary allocation mode uses, to signal allocations to said terminal, resource blocks distributed in a temporal schema that is distributed equally within time intervals on the downlink.

11. Method according to any one of Claims 1 to 10, wherein said radio communication network is of fifth-generation cellular type,
wherein said standard transmission mode is of eMBB (for "enhanced Mobile Broadband") type,
and wherein said priority transmission mode is of URLLC (for "Ultra-Reliable and Low Latency Communications") type.

12. Computer program product comprising program code instructions for implementing a method according to any one of Claims 1 to 11 when said program is executed on a computer.

13. Allocation module (700) for allocating resources on an uplink (UL) between a user terminal (100) and a base station (120) of a radio communication network multiplexing data in resource blocks (250, 250r) that are time-distributed and frequency-distributed into time intervals,
said allocation module comprising allocation means (702) implementing at least two resource allocation modes:
- a first allocation mode, called standard allocation mode, associated with a first transmission mode of said terminal, called standard transmission mode, and implementing at least one signalling portion containing resource allocation information in each time interval; and
- a second allocation mode, called priority allocation mode, associated with a second transmission mode of said terminal, called priority transmission mode, in which
said means favour said priority allocation mode and are able to allocate, to said terminal, using said priority allocation mode, at least one resource block (250) previously allocated using said standard allocation mode, introducing an allocation collision situation,
**and characterized in that,** in such a collision situation, said means implement a temporary allocation mode in order to allocate at least one substitute resource block (250r) in the standard transmission mode, implementing a number of signalling portions containing resource allocation information greater than that used in the standard allocation mode, in each time interval.

14. Reception module (800) for receiving, by way of a user terminal (100), an allocation of resources on an uplink (UL) between said terminal and a base station (120) of a radio communication network multiplexing the data in resource blocks that are time-distributed and frequency-distributed into time intervals,
said reception module comprising reception means (802) for receiving resource allocation information using at least two resource allocation modes:
- a first mode in which resources are allocated by the network, called standard allocation mode, associated with a first transmission mode of said terminal, called standard transmission mode, said standard allocation mode implementing at least one signalling portion containing resource allocation information in each time interval; and
- a second mode in which resources are allocated by the network, called priority allocation mode, associated with a second transmission mode of said terminal, called priority transmission mode,
in which
when at least one resource block (250) previously allocated using said standard allocation mode is then allocated using said priority allocation mode, introducing an allocation collision situation, and **characterized in that** said means receive resource allocation information using a temporary allocation mode in order to allocate at least one substitute resource block (250r) in the standard transmission mode, implementing a number of signalling portions greater than that used in the standard allocation mode, in each time interval.
